# EUROPÄISCHE PATENTSCHRIFT

(11) **EP 2 608 940 B1**
(45) Veröffentlichungstag und Bekanntmachung des Hinweises auf die Patenterteilung: **04.11.2015**
(21) Anmeldenummer: 11740939.1
(22) Anmeldetag: 09.08.2011
(51) Int. Cl.: B26D 3/18

(54) **VORRICHTUNG ZUM WÜRFELN VON LEBENSMITTELN**
DEVICE FOR CUTTING UP FOODSTUFFS
DISPOSITIF DE FORMATION DE DÉS DE PRODUITS ALIMENTAIRES

(30) Priorität: 24.08.2010 DE 102010039720
(43) Veröffentlichungstag der Anmeldung: 03.07.2013
(73) Patentinhaber: BSH Hausgeräte GmbH, 81739 München (DE)
(72) Erfinder: BERZELAK, Matej, 3330 Mozirje (SI); MAZEJ, Stanislav, 3303 Gomilsko (SI); BLAGOTINSEK, Andrej, 2380 Slovenj Gradec (SI); JEGRISNIK, Uros, 3313 Polzela (SI)
(86) Internationale Anmeldenummer: PCT/EP2011/063671
(87) Internationale Veröffentlichungsnummer: WO 2012/025368

(56) Entgegenhaltungen:
- WO-A1-2010/012727
- DE-B- 1 156 267
- DE-U1- 20 314 246
- DE-U1- 20 314 247

## Beschreibung

### Gebiet der Erfindung

Die Erfindung betrifft eine Vorrichtung für ein Küchengerät zur Behandlung von Bearbeitungsgut, beispielsweise zum Würfeln von Lebensmitteln, mit einem rotierenden Ringelement, das mit seiner unteren Axialfläche auf einer oberen Axialfläche eines statischen Gehäuseteils aufliegt. Die Erfindung betrifft ferner eine mit einer derartigen Vorrichtung ausgestattete Küchenmaschine.

### Hintergrund der Erfindung

Eine Vorrichtung und Einrichtung der eingangs genannten Art sind aus der Offenlegungsschrift DE 10 2008 040 937 A1 bekannt. Die dort beschriebene Vorrichtung zum Würfeln von Lebensmitteln umfasst eine zylindrische Schüssel, die zum Aufsetzen auf eine Küchenmaschine vorgesehen ist. Die Küchenmaschine weist eine nach oben auskragende Antriebswelle auf, die im Betrieb die Schüssel im Bereich einer zentralen, hülsenartigen Ausnehmung durchdringt. Auf den oberen Rand der Schüssel ist ein Gehäuseteil aufgesetzt, welches einerseits das rotierende Schneidwerkzeug und andererseits das statische Schneidgatter aufnimmt. Das Gehäuseteil ist mit einem Deckel verschließbar, das im Bereich des Schneidgatters einen nach oben auskragenden Zuführschacht für die Zufuhr des Bearbeitungsguts aufweist. Die Antriebswelle der Küchenmaschine ist im oberen Bereich der Ausnehmung zur Übertragung des Drehmoments formschlüssig in eine Kupplungseinrichtung des Schneidwerkzeugs eingelassen.

Das Gehäuseteil ist kreisscheibenförmig ausgebildet und mit einem exzentrisch angeordneten, näherungsweise rechteckigen Durchbruch für den Durchtritt des Bearbeitungsguts versehen, der sich im unteren Bereich konisch verjüngt. Auf im sich verjüngenden Teil des Durchbruchs vorgesehene Stützrippen ist das gleichfalls rechteckige Schneidgatter flächenbündig mit der Oberseite des Gehäuseteils aufsetzbar. Im Gehäuseteil befindet sich ferner mittig eine im Wesentlichen zylinderförmige, in Betriebsposition vertikale Bohrung, deren Mantelfläche bereichsweise in den Durchbruch übergeht. Das Schneidgatter weist aus diesem Grund eine der Mantelfläche folgende Einbuchtung auf. Die Bohrung ist zur Aufnahme der hülsenartigen Kupplungseinrichtung des Schneidwerkzeugs vorgesehen, die zum Aufsetzen auf die Antriebswelle der Küchenmaschine nach unten offen ausgebildet ist. Nach oben hin ist das Schneidwerkzeug im Bereich der Kupplungseinrichtung mit einem umlaufenden Kragen und einem Stift versehen, die koaxial zueinander sowie zur Drehachse der Antriebswelle angeordnet sind. Das Schneidwerkzeug wird einerseits über die untere Mantelfläche der Kupplungseinrichtung in der Bohrung und andererseits mittels Kragen beziehungsweise Stift an einem nach unten auskragenden Ringvorsprung des Deckels radial drehgelagert.

Das Schneidwerkzeug ist ferner mit einem zur Drehachse koaxial ausgerichteten, im Bereich seines Außenumfangs vollumfänglich umlaufenden Ringelement ausgestattet, das über zwei sich horizontal erstreckende, einander gegenüberliegende Schneidmesser mit dem oberen Teil der Kupplungseinrichtung verbunden ist. Ringelement und Kupplungseinrichtung bilden somit gemeinsam einen Messerträger für das Schneidwerkzeug aus. Die Schneidmesser sind in üblicher Weise derart geneigt angeordnet, dass das vom Schneidwerkzeug in Scheiben quergeschnittene Bearbeitungsgut bei dessen Rotation infolge Keilwirkung durch das Schneidgatter getrieben und dort längsgeschnitten wird. Entlang des Außenumfangs gleichmäßig verteilt sind am Gehäuseteil Abstützeinrichtungen in Form hakenartiger Riegelelemente angeordnet, die an ihrem unteren Ende jeweils um eine vertikale, tangential zum Außenumfang des Gehäuseteils ausgerichtete Drehachse schwenkbar sind.

Bei der Inbetriebnahme der Vorrichtung wird die Kupplungseinrichtung in die Bohrung eingeschoben, bis die untere Axialfläche des Ringelements auf der Oberseite des Gehäuseteils aufliegt. Nachfolgend werden die geöffneten Riegelelemente durch ein zum Zentrum des Gehäuseteils gerichtetes Schwenken mit ihrem oberen Horizontalschenkel über die obere Axialfläche des Ringelements geschoben, bis diese aneinander anliegen. Derartige Vorrichtungen zum Zerteilen von Bearbeitungsgut sowie damit ausgestattete Küchenmaschinen haben sich in der Praxis bewährt. Es kann aber bei der Bearbeitung von besonders anhaftendem Gut nicht ausgeschlossen werden, dass sich Bearbeitungsgut im Ringspalt zwischen dem statischen Gehäuseteil und dem rotierenden Ringelement des Werkzeugs anlagert und zu unerwünschter Reibung führen kann, was einen Leistungsverlust der Küchenmaschine sowie eine thermische Belastung der sich relativ zueinander bewegenden Axialflächen von Gehäuseteil und Werkzeug zur Folge haben kann.

Eine weitere Vorrichtung zum Behandeln von Bearbeitungsgut, insbesondere zum Würfeln von Obst und Gemüse, ist aus der deutschen Gebrauchsmusterschrift DE 203 14 247 U1 bekannt. Sie besteht aus einem ortsfest im Maschinengestell angeordneten Würfelgatter und einem zu diesem parallel rotierenden Messer. Das Messer ist balkenförmig ausgebildet und weist zwei Messerklingen auf, die spiegelbildlich zueinander angeordnet und mit der Antriebswelle der Vorrichtung verbunden sind. Die Messerklingen bilden mit dem Würfelgatter einen sich bei Drehung des Messers verengenden Keilspalt aus, mittels dessen die zum Schneiden des Bearbeitungsguts im Würfelgatter erforderlich Axialkraft erzeugt wird. Die entsprechende Gegenkraft wird durch eine Abstützeinrichtung in Form von zwei sich zum Würfelgatter hin konisch verjüngenden Stützrollen aufgefangen, die im zuerst vom Messerbalken überstrichenen Bereich des Würfelgatters in Höhe des Außenumfangs des Messers angeordnet sind. Der komplementär zur den konischen Stützrollen geformte Außenumfang jeder Messerklinge läuft beim Betrieb der Vorrichtung je Umdrehung einmal in die Rolle ein, welche die auf das Messer wirkenden axialen, vom Würfelgatter weg gerichteten Reaktionskräfte aufnimmt und in das Maschinengestell ableitet. Hierdurch wird ein unzulässiges Verbiegen des Messers vermieden, welches zu einem ungleichmäßigen Bearbeitungsergebnis und zu einem Kontakt des Messers mit dem Zuführschacht führen kann. Über eine Klemmeinrichtung können die konischen Rollen in ihrer axialen Position relativ zum Maschinengestell eingestellt werden.

Diese Vorrichtung weist keinen äußeren, ringförmigen Messerträger auf, so dass durch anhaftendes Bearbeitungsgut keine Reibung in einem Ringspalt entstehen kann. Nachteilhaft ist jedoch, dass die Messerklingen bei jeder Umdrehung gegen die konische Mantelfläche der Stützrollen laufen, was eine erhöhte Geräuschemission der Vorrichtung zur Folge haben kann. Darüber hinaus kann die Gefahr bestehen, dass Bestandteile des Bearbeitungsguts beim Einlaufen der Messerklingen in die Stützrollen zwischen diese und den Außenumfang des Messers geraten. Bei einer unkorrekten Einstellung der Stützrollen sind ein erhöhter Verschleiß oder sogar eine Beschädigung von Messer oder Abstützeinrichtung nicht ausgeschlossen.

Die Patentanmeldung WO2010/012727 A1 offenbart eine Vorrichtung zum Zerteilen von Bearbeitungsgut, insbesondere zum Würfeln von Lebensmitteln, mit einem entlang eines Schneidgatters um eine Drehachse rotierenden Schneidwerkzeug. Das Schneidwerkzeug ist mittels einer Abstützeinrichtung radial außen in axialer Richtung gestützt. Dabei weist das Schneidwerkzeug mindestens ein Schneidmesser sowie einen im Bereich seines Außenumfangs vollständig umlaufenden, zur Anlage an die radial nach außen wirkende Abstützeinrichtung vorgesehenen Messerträger auf.

Die Gebrauchsmusterschrift DE 20314246 U1 offenbart ein Schneidwerkzeug zum Würfeln von Lebensmitteln, insbesondere zum Würfeln von Obst und Gemüse in Bandschneidemaschinen, welches einen Messerträger aufweist oder als trägerloses Flügelmesser ausgebildet ist. Das Schneidwerkzeug verfügt zumindest über ein Messer und rotiert zwischen einem Zuführschacht und einem ortsfest montierten Würfelgatter. Dabei ist zwischen dem Schneidwerkzeug und dem Würfelgatter ein sich verengender, das Lebensmittel durch das Würfelgatter pressender Keilspalt vorhanden. Jedem Messer des Schneidwerkzeugs ist zumindest eine den Bereich des Würfelgatter bei der Rotation des Schneidwerkzeugs durchlaufende, die Ausdehnung des Schneidwerkzeugs zum Würfelgatter vergrößernde, in Richtung der Schneide des Messers abfallend verlaufende und in ihrer Länge der beim Schnitt des Messers wirksamen Schneidenlänge zumindest entsprechende Druckschiene zugeordnet. Zudem sind beim Schneiden unterschiedlicher Würfelgrößen sich in ihrer zum Würfelgatter gerichteten Ausdehnung unterscheidende Druckschienen vorgesehen, oder die Druckschienen sind in ihrer zum Würfelgatter gerichteten Ausdehnung einstellbar ausgebildet.

Die Patentanmeldung DE 1156267 beschreibt eine Maschine zum Schnitzeln von würfelförmigen Stückchen aus Hackfrüchten, bei der in einem Gehäuse ein rotierendes Messer vorgesehen ist, das die betreffenden Erzeugnisse zunächst durch einen Schnitt in der Rotationsebene teilt und sie anschließend durch ein ortsfestes rost- bzw. gitterförmiges Messersystem presst. Dabei bildet das äußere Ende des Messers einen Schaber, der stets die Gehäusewand von losen Teilen freihält und diese in Richtung auf die Rotationsachse drückt, sodass sie durch das Messer durch das ortsfeste Messersystem hindurchgepresst werden.

### Der Erfindung zugrundeliegende Aufgabe

Der Erfindung liegt die Aufgabe zugrunde, eine verbesserte Vorrichtung für ein Küchengerät zur Behandlung von Bearbeitungsgut mit einem rotierenden Ringelement, das mit seiner unteren Axialfläche auf einer oberen Axialfläche eines statischen Gehäuseteils (2) aufliegt, bereitzustellen. Die Erfindung soll aus dem Stand der Technik bekannte Nachteile überwinden. Insbesondere soll die Vorrichtung derart dahingehend weiter entwickelt werden, dass auch Anhaftungen kritischer Bearbeitungsgüter beim Betreiben der Küchenmaschine weitgehend vermieden oder beseitigt werden, um dadurch verursacheten Verschleiß oder Beschädigungen vermeiden.

### Erfindungsgemäße Lösung

Die der Erfindung zugrunde liegende Aufgabe wird durch eine Vorrichtung für ein Küchengerät zur Behandlung von Bearbeitungsgut insbesondere zum Würfeln von Lebensmitteln, mit einem rotierenden Ringelement gelöst, das mit seiner unteren Axialfläche auf einer oberen Axialfläche eines statischen Gehäuseteils aufliegt, wobei an der oberen und/oder unteren Axialfläche von Gehäuseteil und/oder rotierendem Ringelement Mittel zur Radialförderung des Bearbeitungsguts im Ringspalt vorgesehen sind. Die Aufgabe wird ferner gelöst durch eine Küchenmaschine, die mit einer derartigen Vorrichtung versehen ist.

In einer erfindungsgemäßen Ausführung der Erfindung umfassen die Mittel zur Radialförderung mindestens einen in die oberen und/oder unteren Axialfläche eingelassenen, in radialer Richtung schräg angeordneten Förderkanal, wobei der radial äußere Bereich des Förderkanals gegenüber dem radial inneren Bereich des Förderkanals in der rotierenden unteren Axialfläche des Ringelements voreilend und/oder in der statischen oberen Axialfläche des Gehäuseteils nachfolgend vorgesehen ist. Diese Ausbildung kann fördertechnisch besonders wirksam und konstruktiv besonders einfach umzusetzen sein, beispielsweise durch eine geringe Modifikation des Spritzgießwerkzeugs von aus Kunststoff spritzgegossenem Werkzeug oder Gehäuseteil.

Es ist ein erreichbarer Vorteil der Erfindung, dass das im Ringspalt anhaftende und unerwünschte Reibungsverluste erzeugende Bearbeitungsgut mit einer radial aus dem Ringspalt weisenden Kraft beaufschlagt wird, welche das Bearbeitungsgut zumindest teilweise aus dem Ringspalt entfernt und umfassende Anhaftungen vermeidet. Hierdurch steht die Leistung einer die Vorrichtung in Rotation versetzenden Maschine, beispielsweise einer Küchenmaschine, im Wesentlichen für die Behandlungsarbeit zur Verfügung. Ferner werden die sich zueinander bewegenden Komponenten der Maschine im Bereich ihrer axial aufeinander liegenden Flächen thermisch weniger belastet. Bei thermisch instabilem Bearbeitungsgut wird darüber hinaus die Wahrscheinlichkeit einer thermischen Zersetzung oder Oxidation herabgesetzt, so dass sich die Qualität des behandelten Bearbeitungsguts verbessern kann.

### Bevorzugte Ausgestaltungen der Erfindung

Vorteilhafte Aus- oder Weiterbildungen, welche einzeln oder in Kombination miteinander eingesetzt werden können, sind Gegenstand der abhängigen Ansprüche.

Bevorzugt ist die Vorrichtung zum Zerkleinern von Bearbeitungsgut, insbesondere zum Würfeln von Lebensmitteln, vorgesehen, wobei das rotierende Ringelement als Messerträger für entlang eines Schneidgatters um eine Drehachse rotierenden Schneidmesser ausgebildet ist und das Gehäuseteil ein Schneidgatter aufnimmt und im Bereich des Schneidgatters einen axialen Durchbruch aufweist. Derartige Vorrichtungen neigen beim Zerkleinern klebriger Lebensmittel, z.B. Lebensmitteln mit einem hohen Zucker- und/oder Wassergehalt, in besonderer Weise zu Anhaftungen, so dass die erfindungsgemäßen Vorteile verstärkt Wirkung zeigen. Auch kann eine Geschmacksbeeinträchtigung durch thermische Zersetzung oder Oxidation gegebenenfalls reduziert werden.

Mit Vorteil sind die Mittel zur radialen Förderung des Bearbeitungsguts in Richtung der Drehachse des rotierenden Ringelements vorgesehen, wo sie dem sich in Bearbeitung befindlichen Bearbeitungsgut wieder auf besonders einfache Weise zugeführt werden können. Dadurch ist insbesondere vermeidbar, dass das geförderte Bearbeitungsgut auf sonstige Weise aufgefangen werden muss.

Um das Entfernen von anhaftendem Bearbeitungsgut aus dem Ringspalt besonders wirkungsvoll zu gestalten, kann mit Vorteil vorgesehen werden, dass eine Vielzahl von Förderkanälen äquidistant über die obere und/oder untere Axialfläche verteilt ist. Bei einer üblichen Küchenmaschine kann die Anzahl der Förderkanäle zwischen 6 und 10, insbesondere 8 betragen. Hierdurch wird die Zeit, die dem Bearbeitungsgut beim Betreiben der Maschine zum Anhaften verbleibt, deutlich reduziert.

Nach einer bevorzugten Ausbildung verläuft der mindestens eine Förderkanal geradlinig und ist gegenüber der radialen Richtung um einen Winkel von 30° bis 60°, insbesondere etwa 45°, schräg angeordnet. Diese Gestaltung kann fördertechnisch besonders wirksam sein und ohne Reinigen der Maschine über Gebühr zu erschweren. Der mindestens eine Förderkanal kann jedoch auch eine andere Gestalt aufweisen, beispielsweise kann er die Form eines Kreis- oder Spiralabschnitts haben.

Weiterhin ist bevorzugt, dass die Tiefe des mindestens einen Förderkanals dem 0,1 bis 0,5fachen, insbesondere dem etwa 0,2fachen der Länge des Förderkanals entspricht. Diese Tiefe kann bei in der Küche üblichen Bearbeitungsgütern zu besonders guten Förderergebnissen führen, ohne die Stabilität des Ringelement und/oder des Gehäuseteils zu stark zu beeinträchtigen, so dass in der Regel auch ein nachträgliches Einarbeiten des Förderkanals in eine bestehende Konstruktion möglich sein dürfte.

Zur Reduzierung von Verschleiß im Bereich des Förderkanals kann ferner mit Vorteil vorgesehen werden, dass die Kanten zwischen Förderkanal und Axialfläche mit einer Fase, insbesondere von 45°, ausgestattet sind.

In einer bevorzugten Ausbildung der Erfindung ist der mindestens eine Förderkanal auf der unteren, ringförmigen Axialfläche des Ringelements angeordnet. Mit einem Wechsel des Werkzeugs können somit nicht nur die Schneidmesser, sondern auch die Mittel zur Radialförderung an den jeweiligen Bearbeitungsfall angepasst werden. Weiterhin ist bevorzugt, dass der mindestens eine Förderkanal am radialen Innenumfang des Ringelements ausmündet und sich vorzugsweise vom Außen- bis zum Innenumfang des Ringelements erstreckt. Hierdurch können die Förderwirkung verbessert und die Reinigung des Werkzeugs nochmals erleichtert werden.

Besonders vorteilhaft kann es in diesem Fall sein, wenn in die obere Axialfläche des Gehäuseteils diesseits des Ringelements eine Vertiefung zum Sammeln des geförderten Bearbeitungsguts eingelassen ist. Das aus dem Ringspalt radial nach innen geförderte Bearbeitungsgut kann von dieser Vertiefung aufgenommen und nachfolgend von den darüber streifenden Messern wieder aufgegriffen und dem Bearbeitungsprozess zugeführt werden.

Die Rückführung des in der Vertiefung gesammelten Bearbeitungsguts kann dadurch besonders günstig beeinflusst werden, dass die Vertiefung, relativ zur Drehrichtung des Ringelements, dem Schneidgatter nachfolgend angeordnet ist. Weiter nimmt die Tiefe die Vertiefung vorzugsweise in Drehrichtung des Ringelements ab. Besonders vorzugsweise geht sie auf ihrer dem Schneidgatter abgewandten Seite im Wesentlichen kontinuierlich in die die Vertiefung umgebende Fläche des Gehäuseteils über. Dadurch kann das Bearbeitungsgut besonders günstig in den oder die Förderkanäle des Ringelements geleitet werden.

In einer bevorzugten Ausführung der Erfindung verjüngt sich die Vertiefung in Drehrichtung des Ringelements in radialer Richtung. Weiter ist es zur Vereinfachung der Reinigung des Gehäuseteils bevorzugt, dass die Vertiefung in die Aufnahme für das Schneidgatter einmündet.

### Kurzbeschreibung der Figuren

Die Erfindung wird im Folgenden anhand schematischer Zeichnungen an einem Ausführungsbeispiel mit weiteren Einzelheiten näher erläutert.

Es zeigen schematisch:
- Fig. 1:: eine perspektivische Ansicht einer erfindungsgemäßen Vorrichtung zum Einsatz in einer Küchenmaschine;
- Fig. 2:: das drehantreibbare Werkzeug der in Fig. 1 gezeigten Vorrichtung in perspektivischer, gegenüber der Betriebslage überkopf ausgerichteter Darstellung;
- Fig. 3:: das Gehäuseteil der in Fig. 1 gezeigten Vorrichtung in perspektivischer Darstellung.

### Ausführliche Beschreibung der Erfindung anhand eines Ausführungsbeispiels

Richtungs- und Lageangaben in der nachfolgenden Beschreibung beziehen sich auf die übliche Einbau- und Betriebsstellung der Vorrichtung, bei welcher die Drehachse des Werkzeugs vertikal verläuft und das rotierende Ringelement auf dem Gehäuseteil aufliegt.

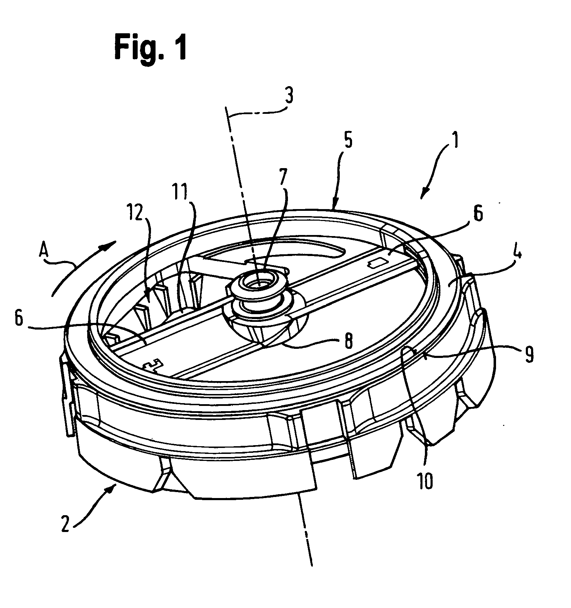

Die in Fig. 1 dargestellte Vorrichtung umfasst ein Werkzeug 1, das zur Behandlung von Bearbeitungsgut gegenüber einem statischen Gehäuseteil 2 um eine Drehachse 3 in Rotation (Drehrichtung A) versetzt werden kann. Das Werkzeug 1 weist außen ein umlaufendes Ringelement 4 auf, das als Messerträger 5 für zwei einander diametral gegenüberliegende Schneidmesser 6 dient. Mittig weist das Werkzeug 1 eine Kupplung 7 zur drehfesten Verbindung mit der nicht gezeigten Antriebswelle der Küchenmaschine auf. Das Gehäuseteil 2 ist koaxial zur Drehachse 3 zylinderförmig ausgebildet und mit einer zentralen Bohrung 8 versehen, in welche die Kupplung 7 des Werkzeugs 1 eingesteckt werden kann. In montiertem Zustand liegt die untere Axialfläche 9 des Ringelements 4 auf der oberen Axialfläche 10 des Gehäuseteils 2 auf. Werkzeug 1 und Gehäuseteil 2 sind zumindest in wesentlichen Teilen üblicherweise aus thermoplastischem Kunststoff durch Spritzgießen gefertigt.

Das Gehäuseteil 2 weist ferner außermittig einen axialen Durchbruch 11 mit einer Aufnahme 12 zum Halten eines nicht dargestellten, statischen Schneidgatters auf, das beim Betreiben der Vorrichtung mit der oberen Axialfläche 10 des Gehäuseteils fluchtet. Zum Würfeln von Lebensmitteln werden diese über einen nicht gezeigten Schacht von oben zum Schneidgatter geführt, von den schräg stehenden Schneidmessern 6 in Scheiben geschnitten und durch das Schneidgatter gepresst, wodurch die Scheiben in Würfel zerteilt werden.

Während dieses Vorgangs können sich Bearbeitungsgut oder daraus austretende Säfte im sehr engen Ringspalt zwischen der oberen Axialfläche 9 des Ringelements 4 und der unteren Axialfläche 10 des Gehäuseteils 2 anlagern und die bei Drehung des Werkzeugs 1 auftretende Reibung deutlich erhöhen. Dies führt zur Leistungsverlusten und einer thermischen Belastung der Vorrichtung und des Bearbeitungsguts.

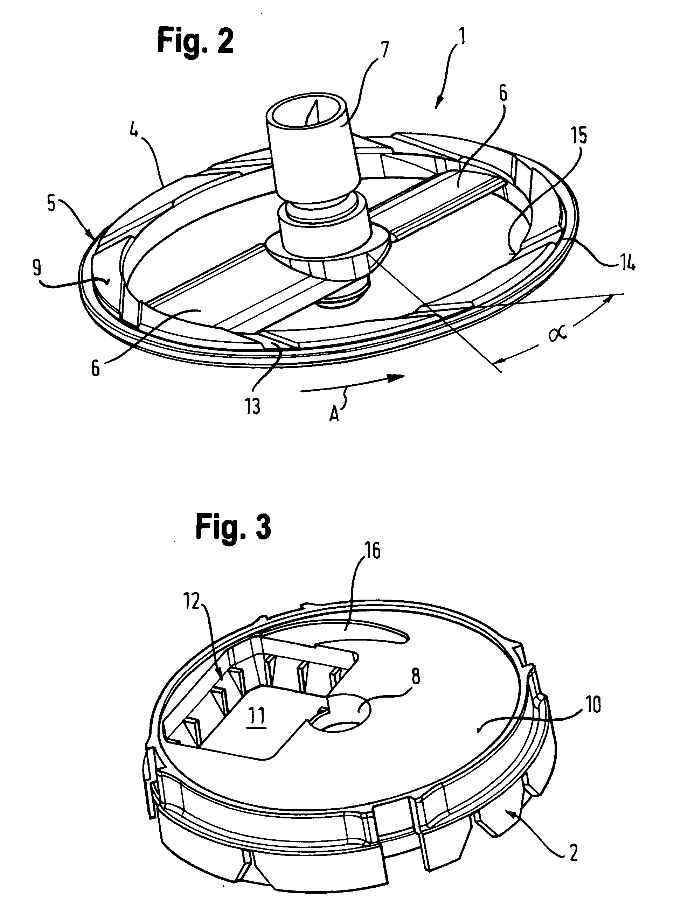

Wie aus Fig. 2 ersichtlich, ist in die untere Axialfläche 9 des Ringelements 4 eine Vielzahl von zueinander gleichmäßig beabstandeten Förderkanälen 13 eingelassen, die jeweils gegenüber der radialen Richtung mit einem Winkel α schräg orientiert sind. Die Förderkanäle 13 weisen eine über die gesamte Erstreckung des Ringelements 4 konstante Breite und Tiefe auf und sind derart geneigt, dass der radial äußere Bereich 14 jedes Förderkanals 13 gegenüber dem radial inneren Bereich 15 des betreffenden Förderkanals 13 voreilend vorgesehen ist. Bei Drehung des Werkzeugs 1 wird im Ringspalt befindliches Bearbeitungsgut zunächst von den Förderkanälen 13 aufgenommen. Durch Reibung am Gehäuseteil 2 wird auf das in den Förderkanälen 13 befindliche Bearbeitungsgut eine gegen die Drehrichtung (Pfeil A) gerichtete Kraft ausgeübt, die durch die Schrägstellung der Förderkanäle 13 eine radiale, nach innen gerichtete Kraftkomponente erfährt und hierdurch eine radiale Förderung in Richtung der Drehachse 3 bewirkt. Die sich entleerenden Förderkanäle 13 werden kontinuierlich mit weiterem Bearbeitungsgut befüllt, wobei die Kanten zwischen Axialfläche 9 und Förderkanal 13 anhaftendes Bearbeitungsgut von der Axialfläche 10 schaben.

In die obere Axialfläche 10 des Gehäuseteils 2 ist, wie in Fig. 1 und 3 dargestellt, diesseits des Ringelements 4 und dem Durchbruch 11 nachfolgend, eine Vertiefung 16 eingelassen. Die Vertiefung 16 nimmt das radial geförderte Bearbeitungsgut aus den bei Drehung des Ringelements 4 vorbeieilenden Förderkanälen 13 auf und führt dieses wieder dem Bearbeitungsprozess zu. Die Vertiefung 16 mündet entgegen der Drehrichtung des Werkzeugs 1 in die Aufnahme 12 ein und verjüngt sich in Drehrichtung des Werkzeugs 1 in radialer wie axialer Richtung, so dass die Entstehung von Ablagerungen in der Vertiefung 16 verhindert wird.

Durch die Erfindung kann im Ringspalt anhaftende und unerwünschte Reibungsverluste erzeugende Bearbeitungsgut zumindest teilweise aus dem Ringspalt entfernt und können dadurch verursache Reibung vermieden werden. Hierdurch steht die Leistung der Küchenmaschine im Wesentlichen für die Behandlungsarbeit zur Verfügung. Ferner werden die sich zueinander bewegenden Komponenten der Maschine im Bereich ihrer axial aufeinander liegenden Flächen thermisch weniger belastet. Bei thermisch instabilem Bearbeitungsgut wird darüber hinaus die Wahrscheinlichkeit einer thermischen Zersetzung oder Oxidation herabgesetzt, so dass sich die Qualität des behandelten Bearbeitungsguts verbessern kann.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein. Die Bezugszeichen in sämtlichen Ansprüchen haben keine einschränkende Wirkung, sondern sollen lediglich deren Lesbarkeit verbessern.

### Bezugszeichenliste

- 1: Werkzeug
- 2: Gehäuseteil
- 3: Drehachse
- 4: Ringelement
- 5: Messerträger
- 6: Schneidmesser
- 7: Kupplung
- 8: Bohrung
- 9: Axialfläche (des Ringelements)
- 10: Axialfläche (des Gehäuseteils)
- 11: Durchbruch
- 12: Aufnahme
- 13: Förderkanal
- 14: Bereich (des Förderkanals)
- 15: Bereich (des Förderkanals)
- 16: Vertiefung

- α: Winkel (Schrägstellung der Förderkanäle)
- A: Pfeil (Drehrichtung)

## Patentansprüche

1. Vorrichtung für ein Küchengerät zur Behandlung von Bearbeitungsgut mit einem rotierenden Ringelement (4), das mit seiner unteren Axialfläche (9) auf einer oberen Axialfläche (10) eines statischen Gehäuseteils (2) aufliegt, **dadurch gekennzeichnet, dass** an der oberen und/oder unteren Axialfläche (10, 9) von Gehäuseteil (2) und/oder rotierendem Ringelement (4) Mittel zur Radialförderung des Bearbeitungsguts im Ringspalt vorgesehen sind, wobei die Mittel zur Radialförderung mindestens einen in die obere und/oder untere Axialfläche (9, 10) eingelassenen, in radialer Richtung schräg angeordneten Förderkanal (13) umfassen, wobei der radial äußere Bereich (14) des Förderkanals (13) gegenüber dem radial inneren Bereich (15) des Förderkanals (13) in der unteren Axialfläche (9) des Ringelements (4) voreilend und/oder in der oberen Axialfläche (10) des Gehäuseteils (2) nachfolgend vorgesehen ist.

2. Vorrichtung nach Anspruch 1, **dadurch gekennzeichnet, dass** die Vorrichtung zum Zerkleinern von Bearbeitungsgut vorgesehen ist, wobei das rotierende Ringelement (4) als Messerträger (5) für entlang eines Schneidgatters um eine Drehachse rotierenden Schneidmesser (6) ausgebildet ist und das Gehäuseteil (2) das Schneidgatter aufnimmt und im Bereich des Schneidgatters einen axialen Durchbruch (11) aufweist.

3. Vorrichtung nach Anspruch 1 oder 2, **dadurch gekennzeichnet, dass** die Mittel zur radialen Förderung des Bearbeitungsguts in Richtung der Drehachse (3) des rotierenden Ringelements (4) vorgesehen sind.

4. Vorrichtung nach einem der vorherigen Ansprüche, **dadurch gekennzeichnet, dass** ein Vielzahl von Förderkanälen (13) vorzugsweise äquidistant über die obere und/oder untere Axialfläche (10, 9) verteilt ist.

5. Vorrichtung nach einem der vorherigen Ansprüche, **dadurch gekennzeichnet, dass** der mindestens eine Förderkanal (13) geradlinig verläuft und gegenüber der radialen Richtung um einen Winkel (α) von 30° bis 60°, insbesondere etwa 45°, schräg angeordnet ist.

6. Vorrichtung nach einem der vorherigen Ansprüche, **dadurch gekennzeichnet, dass** die Tiefe des mindestens einen Förderkanals (13) dem 0,1 bis 0,5fachen, insbesondere dem etwa 0,2fachen der Länge des Förderkanals entspricht.

7. Vorrichtung nach einem der vorherigen Ansprüche, **dadurch gekennzeichnet, dass** die Kanten zwischen Förderkanal und Axialfläche mit einer Fase, insbesondere von 45°, ausgestattet sind.

8. Vorrichtung nach einem der vorherigen Ansprüche, **dadurch gekennzeichnet, dass** der mindestens eine Förderkanal (13) auf der unteren, ringförmigen Axialfläche (9) des Ringelements (4) angeordnet ist.

9. Vorrichtung nach Anspruch 8, **dadurch gekennzeichnet, dass** der mindestens eine Förderkanal (13) am radialen Innenumfang des Ringelements (4) ausmündet und sich vorzugsweise vom Außen- bis zum Innenumfang des Ringelements (4) erstreckt.

10. Vorrichtung nach Anspruch 8 oder 9, **dadurch gekennzeichnet, dass** in die obere Axialfläche (10) des Gehäuseteils (2) diesseits des Ringelements (4) eine Vertiefung (16) zum Sammeln des geförderten Bearbeitungsguts eingelassen ist.

11. Vorrichtung nach Anspruch 10, **dadurch gekennzeichnet, dass** die Vertiefung (16) in die Aufnahme (12) für das Schneidgatter einmündet.

12. Vorrichtung nach Anspruch 10 oder 11, **dadurch gekennzeichnet, dass** die Vertiefung (16), relativ zur Drehrichtung (Pfeil A) des Ringelements (4), dem Schneidgatter nachfolgend angeordnet ist.

13. Vorrichtung nach Anspruch 12, **dadurch gekennzeichnet, dass** die Tiefe der Vertiefung (16) in Drehrichtung (Pfeil A) des Ringelements (4) abnimmt.

14. Küchenmaschine mit einer Vorrichtung nach einem der vorhergehenden Ansprüche.

## Claims

1. Apparatus for a kitchen appliance for handling items to be processed, having a rotating ring element (4), the lower axial face (9) of which rests on an upper axial face (10) of a static housing part (2), **characterised in that** means for the radial conveying of the items being processed in the annular gap are provided on the upper and/or lower axial face (10, 9) of housing part (2) and/or rotating ring element (4), wherein the means for radial conveying comprise at least one feed channel (13) embedded into the upper and/or lower axial face (9, 10) and disposed obliquely in the radial direction, the radially outer region (14) of the feed channel (13) being provided ahead of the radially inner region (15) of the feed channel (13) in the lower axial face (9) of the ring element (4) and/or behind in the upper axial face (10) of the housing part (2).

2. Apparatus according to claim 1, **characterised in that** the apparatus is provided for chopping items to be processed, the rotating ring element (4) being configured as a blade support (5) for cutting blades (6) rotating about a rotation axis along a cutting grid and the housing part (2) accommodating the cutting grid and having an axial opening (11) in the region of the cutting grid.

3. Apparatus according to claim 1 or 2, **characterised in that** the means for the radial conveying of the items to be processed are provided in the direction of the rotation axis (3) of the rotating ring element (4).

4. Apparatus according to one of the preceding claims, **characterised in that** a plurality of feed channels (13) are distributed preferably in an equidistant manner over the upper and/or lower axial face (10, 9).

5. Apparatus according to one of the preceding claims, **characterised in that** the at least one feed channel (13) runs in a straight line and is disposed obliquely at an angle (α) of 30° to 60°, in particular around 45°, to the radial direction.

6. Apparatus according to one of the preceding claims, **characterised in that** the depth of the at least one feed channel (13) corresponds to 0.1 to 0.5 times, in particular 0.2 times, the length of the feed channel.

7. Apparatus according to one of the preceding claims, **characterised in that** the edges between feed channel and axial face are equipped with a chamfer, in particular of 45°.

8. Apparatus according to one of the preceding claims, **characterised in that** the at least one feed channel (13) is disposed on the lower, annular axial face (9) of the ring element (4).

9. Apparatus according to claim 8, **characterised in that** the at least one feed channel (13) opens out at the radial inner periphery of the ring element (4) and preferably extends from the outer periphery to the inner periphery of the ring element (4).

10. Apparatus according to claim 8 or 9, **characterised in that** a depression (16) for collecting the conveyed items to be processed is embedded into the upper axial face (10) of the housing part (2) this side of the ring element (4).

11. Apparatus according to claim 10, **characterised in that** the depression (16) opens into the holder (12) for the cutting grid.

12. Apparatus according to claim 10 or 11, **characterised in that** the depression (16) is disposed behind the cutting grid relative to the rotation direction (arrow A) of the ring element (4).

13. Apparatus according to claim 12, **characterised in that** the depth of the depression (16) decreases in the rotation direction (arrow A) of the ring element (4).

14. Food processor having an apparatus according to one of the preceding claims.

## Revendications

1. Dispositif pour un appareil de cuisine destiné au traitement de marchandise à transformer au moyen d'un élément annulaire (4) en rotation, qui, avec sa surface axiale inférieure (9), repose sur une surface axiale supérieure (10) d'une partie de boîtier statique (2), **caractérisé en ce que** sur la surface axiale supérieure et/ou inférieure (10, 9) de la partie de boîtier (2) et/ou de l'élément annulaire (4) en rotation sont ménagés des moyens pour le transport radial de la marchandise à transformer dans la fente annulaire, les moyens pour le transport radial comprenant au moins un canal de transport (13) encastré dans la surface axiale supérieure et/ou inférieure (9, 10), disposé de manière oblique en direction radiale, la partie extérieure radiale (14) du canal de transport (13), par rapport à la partie intérieure radiale (15) du canal de transport (13), étant ménagée en avançant dans la surface axiale inférieure (9) de l'élément annulaire (4) et/ou en étant en arrière dans la surface axiale supérieure (10) de la partie de boîtier (2).

2. Dispositif selon la revendication 1, **caractérisé en ce que** le dispositif est ménagé pour fractionner la marchandise à transformer, l'élément annulaire (4) en rotation étant réalisé comme porte-lames (5) pour des lames (6) en rotation autour d'un axe de rotation le long d'une grille de coupe et **en ce que** la partie de boîtier (2) loge la grille de coupe et présente un passage axial (11) dans la partie de la grille de coupe.

3. Dispositif selon la revendication 1 ou 2, **caractérisé en ce que** les moyens pour le transport radial de la marchandise à transformer sont ménagés en direction de l'axe de rotation (3) de l'élément annulaire (4) en rotation.

4. Dispositif selon l'une quelconque des revendications précédentes, **caractérisé en ce qu'**une pluralité de canaux de transport (13) sont répartis de préférence de manière équidistante sur la surface axiale supérieure et/ou inférieure (10, 9).

5. Dispositif selon l'une quelconque des revendications précédentes, **caractérisé en ce que** l'au moins un canal de transport (13) s'étend de manière rectiligne et, par rapport à la direction radiale, **en ce qu'**il est disposé de manière oblique dans un angle (α) de 30° à 60°, notamment d'environ 45°.

6. Dispositif selon l'une quelconque des revendications précédentes, **caractérisé en ce que** la profondeur de l'au moins un canal de transport (13) correspond de 0,1 à 0,5 fois, notamment à environ 0,2 fois la longueur du canal de transport.

7. Dispositif selon l'une quelconque des revendications précédentes, **caractérisé en ce que** les arêtes entre le canal de transport et la surface axiale sont équipées d'un chanfrein, notamment de 45°.

8. Dispositif selon l'une quelconque des revendications précédentes, **caractérisé en ce que** l'au moins un canal de transport (13) est disposé sur la surface axiale (9) inférieure annulaire de l'élément annulaire (4).

9. Dispositif selon la revendication 8, **caractérisé en ce que** l'au moins un canal de transport (13) débouche sur la circonférence intérieure radiale de l'élément annulaire (4) et s'étend de préférence de la circonférence extérieure jusqu'à la circonférence intérieure de l'anneau annulaire (4).

10. Dispositif selon la revendication 8 ou 9, **caractérisé en ce que** dans la surface axiale supérieure (10) de la partie de boîtier (2), un approfondissement (16), de ce côté de l'élément annulaire (4), est encastré pour collecter la marchandise transportée.

11. Dispositif selon la revendication 10, **caractérisé en ce que** l'approfondissement (16) débouche dans le logement (12) pour la grille de coupe.

12. Dispositif selon la revendication 10 ou 11, **caractérisé en ce que** l'approfondissement (16), par rapport au sens de rotation (flèche A) de l'élément annulaire (4), est disposé en arrière de la grille de coupe.

13. Dispositif selon la revendication 12, **caractérisé en ce que** la profondeur de l'approfondissement (16) diminue dans le sens de rotation (flèche A) de l'élément annulaire (4).

14. Appareil de cuisine comprenant un dispositif selon l'une quelconque des revendications précédentes.
